## Europäisches Patentamt

## European Patent Office

## Office européen des brevets

(11) Veröffentlichungsnummer : **0 020 892**
**B1**

(12) **EUROPÄISCHE PATENTSCHRIFT**

(45) Veröffentlichungstag der Patentschrift :
24.11.82

(21) Anmeldenummer : 80101851.6

(22) Anmeldetag : 08.04.80

(51) Int. Cl.³ : **F 15 B 20/00**// F16K17/10,
F01D17/26, F01D21/18

(54) Sicherheitsschaltung.

(30) Priorität : 22.06.79 CH 5856/79

(43) Veröffentlichungstag der Anmeldung :
07.01.81 (Patentblatt 81/01)

(45) Bekanntmachung des Hinweises auf die Patenterteilung : 24.11.82 Patentblatt 82/47

(84) Benannte Vertragsstaaten :
DE FR GB IT NL

(56) Entgegenhaltungen :
DE A 2 025 836
DE A 2 118 974

(73) Patentinhaber : GEBRÜDER SULZER AKTIENGE-
SELLSCHAFT
Zürcherstrasse 9
CH-8401 Winterthur (CH)

(72) Erfinder : Heusler, Samuel
Nagelseestrasse 50c
CH-8406 Winterthur (CH)

(74) Vertreter : Dipl.-Ing. H. Marsch Dipl.-Ing. K. Sparing
Dipl.-Phys. Dr. W.H. Röhl Patentanwälte
Rethelstrasse 123
D-4000 Düsseldorf (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Sicherheitsschaltung

Die Erfindung betrifft eine Sicherheitsschaltung zu einem doppeltwirkenden Servomotor nach dem Oberbegriff des Anspruchs 1. Eine solche Sicherheitsschaltung ist aus der schweizerischen Patentschrift 533 245 bekannt.

Es ist Aufgabe der Erfindung, diese Sicherheitsschaltung unter Erhöhung der Betriebssicherheit zu vereinfachen. Dieses Ziel wird nach dem Kennzeichen des Anspruchs 1 erreicht. Zusätzliche Vorteile liegen darin, dass die Sicherheitsschaltung keiner Anschlüsse an eine besondere Steuerfluidquelle oder an eine Steuerfluidsenke bedarf.

Die Merkmale nach Anspruch 2 bringen eine weitere Vereinfachung und eine zusätzliche Erhöhung der Betriebssicherheit.

Die Merkmale nach dem Anspruch 3 schaffen zusätzliche Redundanz.

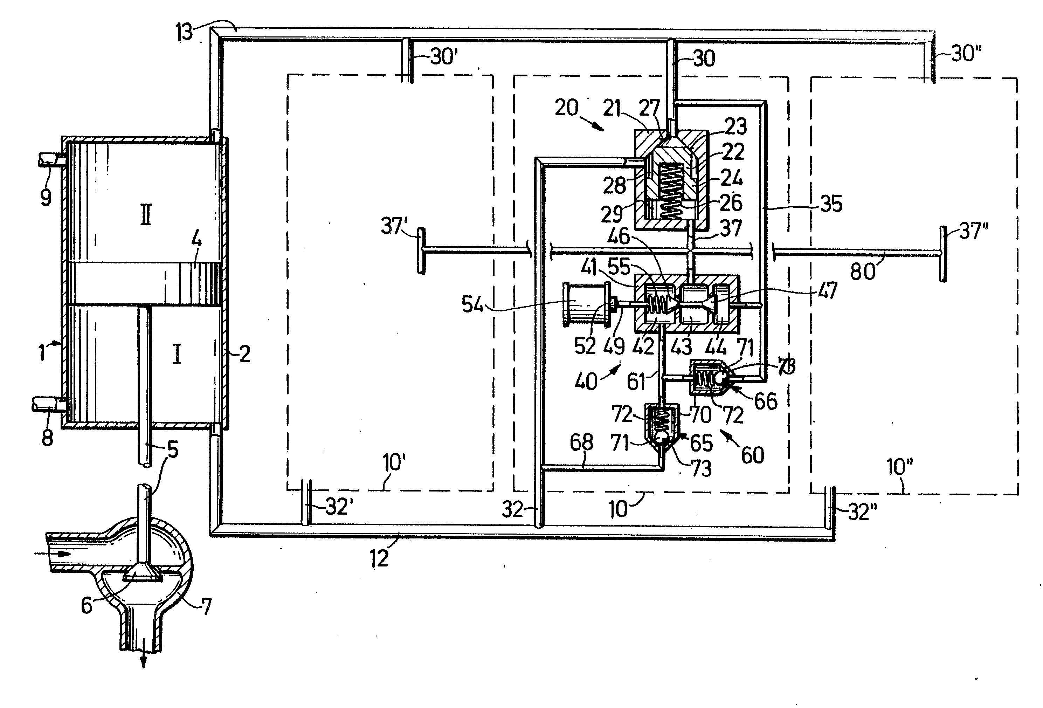

Die Erfindung ist an einem in der Zeichnung schematisch dargestellten Ausführungsbeispiel näher erläutert, wobei der Servomotor auf ein Ueberströmventil einwirkt, das gleichzeitig als Sicherheitsventil dient.

Die einzige Figur zeigt einen doppeltwirkenden Servomotor 1 mit einem Zylinder 2 und einem darin beweglichen Kolben 4, der über eine Kolbenstange 5 auf den Verschlussteil 6 eines verkleinert dargestellten Dampfüberströmventils 7 wirkt, das z.B. in einer Bypassleitung angeordnet ist, die zwischen Dampferzeuger und Turbine einer Dampfkraftanlage abzweigt.

Am Zylinder 2 ist über Stutzen 8 und 9 ein nicht gezeichneter Regler angeschlossen, der Zu- und/oder Abfluss eines Fluides, in diesem Fall eines Regelöls, zu den beiden Zylinderräumen I und II steuert.

An den beiden Zylinderräumen I und II sind eine erste Verteilleitung 12 bzw. eine zweite Verteilleitung 13 angeschlossen, zwischen welche drei gleiche Sicherheitsschaltungen 10, 10' und 10" eingeschaltet sind. Diese enthalten je ein Absperrorgan 20, ein Steuerventil 40 und ein Auswählorgan 60. Das Absperrorgan 20 besteht aus einem Zylinder 21, in dem ein Kolben 22 mit Verschlussteil 23 und Stellkolben 24 gleitbar angeordnet ist. Der Kolben 22 wird von einer Druckfeder 26 so belastet, dass der Verschlussteil 23 gegen eine als Ventilsitz ausgebildete Konusfläche 27 des Zylinders 21 gedrückt wird. Auf der Stirnseite des Verschlussteils 23 ist eine Leitung 30 vorgesehen, die das Absperrorgan 20 mit der Verteilleitung 13 verbindet.

An einem Ringraum 28 zwischen Verschlussteil 23 und Stellkolben 24 ist eine Leitung 32 angeschlossen, die zur Verteilleitung 12 führt.

Das Steuerventil 40 besteht aus einem Gehäuse 41 mit drei Kammern 42, 43 und 44. Die Zwischenwände zwischen den Kammern 42 und 43 bzw. 43 und 44 weisen gegeneinandergerichtete Ventilsitze auf. Mit diesen Ventilsitzen korrespondieren Ventilkegel 46 bzw. 47, die auf einer Stange 49 sitzen, welche das Gehäuse 41 durchdringt. Auf der Stange 49 sitzt ein Anker 52, der in eine Magnetspule 54 eintaucht.

Zwischen dem Ventilkegel 46 und der der Magnetspule 54 benachbarten Wand des Gehäuses 41 ist eine Feder 55 angeordnet, die bei nichterregter Magnetspule 54 die Stange 49 aus der gezeichneten Stellung nach rechts treibt, sodass der Ventilkegel 47 die Oeffnung zwischen den Kammern 43 und 44 freigibt und der Ventilkegel 46 die Oeffnung zwischen den Kammern 42 und 43 verschliesst.

An der Kammer 44 ist eine Leitung 35 angeschlossen, die zur Leitung 30 führt. Die mittlere Kammer 43 ist über eine Verbindungsleitung 37 mit dem die Feder 26 enthaltenden Raum 29 im Absperrorgan 20 verbunden. Die Kammer 42 ist über eine gegabelte Leitung 61 mit den Ausgängen zweier, das Auswählorgan 60 bildender Rückschlagventile 65 und 66 verbunden. Der Eingang des Rückschlagventils 65 ist über eine Leitung 68 an der Leitung 32 angeschlossen, während der Eingang des Rückschlagventils 66 mit der Leitung 35 verbunden ist.

Beide Rückschlagventile 65 und 66 bestehen je aus einem Gehäuse 70 und einer Kugel 71 die durch eine Feder 72 gegen einen Ventilsitz 73 im zugehörigen Gehäuse gedrückt wird.

In Normalbetrieb der Einrichtung steht der Servomotor 1 voll unter dem Einfluss des erwähnten, nicht gezeichneten Reglers. Die Magnetspule 54 steht unter Spannung, der Anker 52 ist angezogen und die Ventilkegel 46 und 47 sind in der gezeichneten Stellung. Damit ist der Raum 29 unterhalb des Stellkolbens 24, zufolge der auswählenden Wirkung der beiden Rückschlagventile 65 und 66, vom höheren, in dem Zylinderraum I herrschenden Druck beaufschlagt. Da die Kraft der Feder 26 die Reibung und das Gewicht des Kolbens 22 überwiegt und somit die von oben auf den Kolben wirkenden Kräfte kleiner sind als die von unten wirkenden, ist das Absperrorgan 20 geschlossen.

Setzt nun das Sicherheitssignal ein, das wegen des angewendeten Ruhestromprinzips im Ausfall der Spannung an der Magnetspule 54 besteht, so verschiebt sich die Stange 49 nach rechts, wodurch im Absperrorgan 20 der Raum 29 unterhalb des Kolbens 22 über die Leitungen 37 und 35 mit dem Zylinderraum II verbunden wird. In diesem Zylinderraum herrscht bei Normalbetrieb ein tieferer Druck als im Raum I. Damit wirkt auf die dem Ringraum 28 zugewendete Ringfläche des Stellkolbens 24 ein höherer Druck, als an den übrigen Flächen des Kolbens 22. Der Differenzdruck überwindet die Kraft der Feder 26 und öffnet das Ventil 23, 27, sodass über die Leitungen 30 und 32 die Verteilleitungen 12 und 13 und damit die Zylinderräume I und II kurz geschlossen werden. Unter der Wirkung der auf den Verschlussteil 6 wirkenden Rückstellkräfte fährt daher der Servomotor rasch in die Sicherheitstellung, wobei das Ventil 7 sich voll öffnet.

Sind aus Redundanzgründen mehrere, z.B. wie gezeichnet drei der erläuterten Sicherheitsschaltungen 10 vorhanden, so besteht eine sehr hohe Wahrscheinlichkeit, dass bei Eintreffen des Sicherheitssignals, d.h. beim Ausfallen der Spannung an den Magnetspulen 54, alle drei Absperrorgane 20, 20' und 20" sich öffnen. Dank einer die Verbindungsleitung 37 der drei Schaltungen verbindenden Querleitung 80 öffnen auch dann alle drei Absperrorgane 20, 20' und 20", wenn eines oder gar zwei der Steuerorgane 40, 60 ; 40', 60' ; 40", 60" auf das Sicherheitssignal nicht ansprechen sollten. Die Betriebssicherheit wird somit durch die Querleitung 80 weiter erhöht.

Selbstverständlich sind die einzelnen Organe passend zu dimensionieren. Es kann auch zweckmässig sein, in der Leitung 61 ein Drosselorgan einzubauen.

Die gezeichnete Anschlussweise des Absperrorgans 20, bei welcher die Leitung 30 stirnseitig des Verschlussteils 23 und die Leitung 32 am Ringraum 28 angeschlossen ist, weist besondere Vorteile bezüglich Leckage auf, indem im Normalbetrieb beidseitig des Stellkolbens 24 der gleiche Druck ansteht.

Die dem Ringraum 28 zugewendete massgebende Ringfläche des Stellkolbens 24 beträgt vorzugsweise etwa 1/3 der gesamten Kolbenfläche.

Es kann zweckmässig sein, das Absperrorgan 20 mit von aussen einstellbarer Hubbegrenzung vorzusehen.

**Ansprüche**

1. Sicherheitsschaltung mit einem doppeltwirkenden, fluidbetriebenen Servomotor (1), dessen Kolben (4) durch Rückstellkräfte und/oder durch interne Zusatzkräfte gegen eine Sicherheitsstellung gedrängt und im Normalbetrieb durch überwiegende, in den beiden Zylinderräumen (I, II) des Servomotors (1) von einem Regler beherrschte Fluiddrücke in die verlangte Regelstellung gebracht wird, wobei Steuermittel (40, 60) vorhanden sind, die beim Auftreten eines Sicherheitsignals ein an die beiden Zylinderräume (I, II) des Servomotors (1) angeschlossenes Absperrorgan (20) öffnen und die ein über eine Verbindungsleitung (37) das Absperrorgan (20) steuerndes Steuerventil (40) umfassen, welches ein Stellglied (24, 29) des Absperrorgans (20) alternativ mit dem Ausgang (61) eines den höheren von zwei eingegebenen Drücken ausgebenden Auswählorgans (60) oder mit einem Raum (II) tieferen Druckes verbindet, und wobei der eine der Eingänge (68) des Auswählorgans (60) mit dem Zylinderraum (I) des Servomotors (1) verbunden ist, der beim Einfahren des Servomotors in die Sicherheitstellung sich verkleinert, dadurch gekennzeichnet, dass der zweite Eingang (35) des Auswählorgans mit dem zweiten Zylinderraum (II) des Servomotors (1) verbunden ist, der beim Einfahren des Servomotors in die Sicherheitstellung sich vergrössert, dass auch das Steuerventil (40) mit dem zweiten Zylinderraum (II) als Raum tieferen Druckes verbunden ist und dass das Steuerventil (40) derart geschaltet ist, dass es den Ausgang (61) des Auswählorgans (60) mit dem Stellglied (24, 29) des Absperrorgans (20) bei Normalbetrieb verbindet.

2. Sicherheitsschaltung nach Anspruch 1, dadurch gekennzeichnet, dass das Absperrorgan (20) einen Verschlusskörper (23) mit anschliessendem Stellkolben (24) aufweist, dass die Räume (28, 30) beidseits des Verschlusskörpers mit den beiden Räumen (I, II) des Servomotors (1) verbunden sind und dass am dem Verschlusskörper (23), abgewendeten, vom Stellkolben (24) bestrichenen Zylinderraum (29) die Verbindungsleitung (37) angeschlossen ist.

3. Sicherheitsschaltung nach einem der Ansprüche 1 und 2, dadurch gekennzeichnet, dass am Servomotor (1) mehrere, je aus Absperrorgan (20, 20',20") und Steuermitteln (40, 60 ; 40', 60', 40", 60") bestehende Systeme (10, 10', 10") angeschlossen und die zwischen Absperrorgan und Steuerventil (40, 40', 40") angeordneten Verbindungsleitungen (37, 37', 37") dieser Systeme durch eine Querleitung (80) verbunden sind.

**Claims**

1. A safety system having a double-acting fluid-operated servo motor (1), whose piston (4) is forced by restoring forces and/or internal additional forces towards a safety position and in normal operation is moved into a required position of adjustment by over-riding fluid pressures operative in the two cylinder chambers (I, II) of the servo motor (1) and controlled by a controller, means (40, 60) being provided which in response to a safety signal open a stop member (20) connected to the two cylinder chambers (I, II) of the servo motor (1) and which comprise a valve (40) controlling the stop member (20) by way of a line (37) and connecting an actuating element (24, 39) of the stop member (20) alternatively to the output (61) of a selector (60) outputting the higher of two received pressures or to a lower-pressure chamber (II), one of the inputs (68) of the selector (60) being connected to the cylinder chamber (I) of the servo motor (1), the latter chamber decreasing in size when the servo motor moves into the safety position, characterised in that the second input (35) of the selector (60) is connected to the second cylinder chamber (II) of the servo motor (1), the latter chamber increasing in size when the servo motor moves into the safety position, the valve (40) is connected to the second cylinder chamber (II) as a lower-pressure chamber, and the valve (40) connects in normal operation the output (61) of the selector (60) to the actuating element (24, 29) of the stop member (20).

2. A safety system according to claim 1, characterised in that the stop member (20) has a lid (23) merging into an actuating part (24), the chambers (28, 30) are connected on either side of the lid (23) to the two servo motor chambers (I, II) and the connecting line (37) is connected to the cylinder chamber (29) in which the actuating part (24) moves and which is remote from the lid (23).

3. A safety system according to claim 1 and/or 2, characterised in that a number of systems (10, 10', 10") each comprising a stop member (20, 20', 20") and control means (40, 60 ; 40' ; 60' ; 40", 60") are connected to the servo motor (1) and the connecting lines (37, 37', 37") of the latter systems, such lines being disposed between the stop member and the valve (40, 40', 40") are interconnected by a cross-line (80).

**Revendications**

1. Montage de sécurité comprenant un servomoteur (1) à double action entraîné par fluide dont le piston (4) est poussé par des forces de rappel et/ou par des forces additionnelles internes vers une position de sécurité et est amené en fonctionnement normal dans la position de régulation recherchée par des pressions de fluide prépondérantes maîtrisées par un régulateur dans les deux chambres de cylindre (I, II) du servomoteur (1), des moyens de commande (40, 60) étant prévus, qui ouvrent, lorsque survient un signal de sécurité, un organe de blocage (20) se raccordant sur les deux chambres de cylindre (I, II) du servomoteur (1) et qui comprennent une soupape de commande (40) commandant l'organe de blocage (20) par l'intermédiaire d'une conduite de liaison (37) et qui relie un élément de réglage (24, 29) de l'organe de blocage (20) alternativement à la sortie (61) d'un organe de sélection (60) délivrant la plus grande de deux pressions introduites ou à une chambre (II) de pression plus basse, l'une des entrées (68) de l'organe de sélection (60) étant reliée à la chambre de cylindre (I) du servomoteur (1) qui se réduit quand le servomoteur entre dans la position de sécurité, caractérisé en ce que la deuxième entrée (35) de l'organe de sélection est reliée à la deuxième chambre de cylindre (II) du servomoteur (1) qui augmente quand le servomoteur entre dans la position de sécurité, en ce que la soupape de commande (40) est également reliée à la deuxième chambre de cylindre (II) en tant que chambre de pression plus basse et en ce que la soupape de commande (40) est montée de telle façon qu'elle relie la sortie (61) de l'organe de sélection (60) à l'élément de réglage (24, 29) de l'organe de blocage (20) en fonctionnement normal.

2. Montage de sécurité selon la revendication 1, caractérisé en ce que l'organe de blocage (20) présente un corps d'obturation (23) auquel se raccorde un piston de réglage (24), en ce que les chambres (28, 30) des deux côtés du corps d'obturation sont reliées aux deux chambres (I, II) du servomoteur (1) et en ce que la conduite de liaison (37) se raccorde sur la chambre de cylindre (29) balayée par le piston de réglage (24) et tournée à l'opposé du corps d'obturation (23).

3. Montage de sécurité selon l'une des revendications 1 et 2, caractérisé en ce que plusieurs systèmes (10, 10', 10") constitués chacun d'un organe de blocage (20, 20', 20") et de moyens de commande (40, 60, 40', 60', 40", 60") sont raccordés sur le servomoteur (1) et en ce que les conduites de liaison (37, 37', 37") de ces systèmes disposées entre l'organe de blocage et la soupape de commande (40, 40', 40") sont reliées par une conduite transversale (80).